(19) Europäisches Patentamt

European Patent Office

Office européen des brevets

(11) **EP 0 606 271 B1**

(12) **FASCICULE DE BREVET EUROPEEN**

(45) Date de publication et mention
de la délivrance du brevet:
**08.05.1996 Bulletin 1996/19**

(51) Int. Cl.⁶: **B01D 53/34**

(86) Numéro de dépôt international: **PCT/EP92/02173**

(21) Numéro de dépôt: **92919607.9**

(87) Numéro de publication internationale:
**WO 93/06916 (15.04.1993 Gazette 1993/10)**

(22) Date de dépôt: **18.09.1992**

(54) **PROCEDE POUR EPURER UN GAZ CONTENANT DE L'OXYDE NITRIQUE**

Verfahren zum Reinigen von einem Stickstoffoxide enthaltenden Gas

METHOD FOR PURIFYING NITRIC OXIDE-CONTAINING GAS

(84) Etats contractants désignés:
**AT BE CH DE DK ES FR GB GR IE IT LI LU NL SE**

(30) Priorité: **30.09.1991 FR 9112098**

(43) Date de publication de la demande:
**20.07.1994 Bulletin 1994/29**

(73) Titulaire: **SOLVAY (Société Anonyme)
B-1050 Bruxelles (BE)**

(72) Inventeur: **DE SOETE, Gérard
F-92700 Colombes (FR)**

(74) Mandataire: **Anthoine, Paul et al
SOLVAY S.A.,
Département de la Propriété Industrielle,
Rue de Ransbeek, 310
B-1120 Bruxelles (BE)**

(56) Documents cités:
**EP-A- 0 301 272        AT-B-  389 825
US-A- 4 588 567        US-A- 5 002 741**

• **DATABASE WPI Section Ch, Week 7927, Derwent
Publications Ltd., London, GB; Class E36, AN 79-
50032B & JP-A-54066375 (MITSUBISHI KK) 28
May 1979**

## Description

L'invention concerne l'épuration des gaz en impuretés toxiques, notamment l'épuration des fumées d'installations thermiques, préalablement à leur rejet dans l'atmosphère.

Elle concerne plus particulièrement un procédé pour épurer un gaz en oxydes d'azote et plus spécialement en oxyde nitrique (NO).

Les fumées générées par la combustion de matières combustibles gazeuses, liquides ou solides sont habituellement contaminées par des oxydes d'azote provenant de l'azote de l'air atmosphérique et, le cas échéant, de composés azotés présents dans le combustible. Dans ces fumées, la majeure partie des oxydes d'azote est de l'oxyde nitrique (NO), le solde étant constitué principalement par du peroxyde d'azote ($NO_2$).

La grande toxicité de l'oxyde nitrique et du peroxyde d'azote implique de les éliminer des fumées avant de rejeter celles-ci dans l'atmosphère.

Dans le brevet US-A-4839147 (Waagner Biro AG), on propose un procédé d'épuration d'une fumée en oxydes d'azote, selon lequel on introduit du sulfite de métal alcalin et du gaz ammoniac dans la fumée, de manière à réduire les oxydes d'azote en oxyde nitreux ($N_2O$) qui est ensuite réduit en azote par l'a-ammoniac. Dans le cas d'une fumée contenant simultanément des oxydes d'azote et du dioxyde de soufre, le sulfite de métal alcalin est formé in situ dans la fumée en introduisant dans celle-ci du carbonate ou du bicarbonate de métal alcalin.

Ce procédé connu présente l'inconvénient de nécessiter la mise en oeuvre de plusieurs réactifs, parmi lesquels un réactif gazeux (de l'ammoniac) dont le caractère toxique implique des mesures de sécurité importantes.

L'invention remédie à cet inconvénient du procédé connu décrit plus haut, en fournissant un procédé nouveau qui permet de réaliser une épuration efficace d'un gaz en oxyde nitrique, en ne nécessitant pas l'emploi d'un réactif gazeux dangereux, et qui peut être réalisé à température modérée, tout en donnant d'excellents résultats.

En conséquence, l'invention concerne un procédé pour épurer un gaz contenant de l'oxyde nitrique au moyen d'un composé de métal alcalin, selon lequel on met en oeuvre une quantité d'oxygène dans le gaz au moins égale à la quantité stoechiométrique nécessaire pour oxyder l'oxyde nitrique en peroxyde d'azote et on sélectionne, pour le composé de métal alcalin, du pyrosulfite de métal alcalin que l'on met en oeuvre en une quantité suffisante pour convertir l'oxyde nitrique du gaz en nitrite et en nitrate de métal alcalin.

Dans le cas où le gaz à traiter contient de l'oxyde nitrique et du peroxyde d'azote, on utilise de préférence une quantité de pyrosulfite de métal alcalin au moins suffisante pour décomposer l'oxyde nitrique et le peroxyde d'azote en nitrite de métal alcalin et en nitrate de métal alcalin.

L'invention s'applique à tous les gaz contenant de l'oxyde nitrique (NO). Elle s'applique spécialement aux gaz générés par la combustion de matières combustibles en présence d'air ou d'oxygène. Par la suite, un gaz provenant de la combustion d'une matière combustible sera dénommé "fumée". Dans le cas où l'invention est appliquée à une fumée, la matière combustible n'est pas critique et peut être invariablement un gaz, un liquide ou un solide. Elle peut comprendre un combustible d'origine fossile (tel que le pétrole et ses dérivés, le charbon et le coke), la biomasse ou des substances organiques ou inorganiques inflammables provenant par exemple de déchets ménagers ou municipaux. L'origine de la fumée n'est pas critique non plus, celle-ci pouvant par exemple provenir d'une centrale thermique de production d'électricité, d'une installation centralisée de chauffage urbain ou d'une installation d'incinération d'ordures ménagères ou municipales.

Le gaz traité dans le procédé selon l'invention contient nécessairement de l'oxyde nitrique (NO). Il peut contenir d'autres oxydes d'azote en plus de l'oxyde nitrique, par exemple de l'oxyde nitreux ($N_2O$), du trioxyde d'azote ($N_2O_3$), du pentoxyde d'azote et du peroxyde d'azote ($NO_2$). Par la suite, les oxydes d'azote du gaz seront désignés dans leur ensemble par la notation $NO_x$. En règle générale, la fraction volumique d'oxyde nitrique (NO) parmi l'ensemble des oxydes d'azote ($NO_x$) du gaz est d'au moins 50 % et généralement supérieure à 75 %; elle peut être de 100 %.

En variante, le gaz peut contenir d'autres composés, notamment des oxydes de soufre. Des oxydes de soufre, notamment du dioxyde de soufre, sont communément présents dans les fumées générées par la combustion de combustibles soufrés d'origine fossile (pétrole et dérivés du pétrole, charbon, coke).

Conformément à l'invention, on met en oeuvre dans le gaz une quantité d'oxygène au moins égale à la quantité stoechiométrique correspondant à celle qu'il faudrait pour oxyder l'oxyde nitrique en peroxyde d'azote selon la réaction :

$$2 \, NO + O_2 \longrightarrow 2 \, NO_2$$

Néanmoins, dans le procédé selon l'invention, l'oxygène n'a pas pour fonction essentielle d'oxyder l'oxyde nitrique en peroxyde d'azote et il coexiste dès lors avec l'oxyde nitrique dans le gaz, en une quantité au moins égale à la quantité stoechiométrique théorique nécessaire pour cette oxydation. Selon l'invention, le rapport molaire $O_2/NO$ dans le gaz doit dès lors être au moins égal à 0,5. En pratique, il s'est avéré souhaitable de réaliser dans le gaz un rapport molaire $O_2/NO$ supérieur à 1 et de préférence au moins égal à 8, les valeurs supérieures à 10 étant recommandées. Bien que le procédé selon l'invention n'impose pas de limite supérieure à la teneur en oxygène du gaz, il n'y a pas intérêt à dépasser un rapport molaire $O_2/NO$ égal à 100, afin de ne pas exagérer inutilement le volume du gaz à traiter. Les valeurs supérieures à 15 conviennent généralement bien, celles supérieures à 25 étant préférées. L'oxygène peut être mis en oeuvre à l'état pur ou, plus simplement à l'état d'air ambiant. Dans le cas où le gaz traité est une fumée, l'oxygène peut être apporté par un excès d'air envoyé dans le foyer où on effectue la combustion du combustible; on peut aussi introduire de l'air dans la fumée en aval du foyer.

Le pyrosulfite de métal alcalin a pour fonction de décomposer le peroxyde d'azote et l'oxyde nitrique du gaz en formant du nitrite de métal alcalin et du nitrate de métal alcalin selon les réactions suivantes :

$$M_2S_2O_5 + 2\ NO_2 \dashrightarrow MNO_2 + MNO_3 + 2\ SO_2$$

$$M_2S_2O_5 + 2\ NO + O_2 \dashrightarrow MNO_2 + MNO_3 + 2\ SO_2$$

où M désigne un métal alcalin.

La quantité optimum de pyrosulfite de métal alcalin peut être déterminée aisément dans chaque cas particulier, en fonction de la composition du gaz, de sa température et de sa pression. Elle doit généralement être supérieure à 0,25 mole, de préférence au moins égale à 0,4 mole, par mole d'oxyde nitrique du gaz à épurer. Dans le cas où le gaz à épurer contient de l'oxyde nitrique et du peroxyde d'azote, le pyrosulfite de métal alcalin doit être mis en oeuvre en une quantité supérieure à 0,25 mole, de préférence au moins égale à 0,4 mole, par mole d'oxyde nitrique et de peroxyde d'azote du gaz. En principe, il n'y a pas de limite supérieure imposée à la quantité de pyrosulfite de métal alcalin utilisée. En pratique, pour des considérations économiques, on n'a pas intérêt à dépasser 50 moles (de préférence 5 moles) de pyrosulfite de métal alcalin par mole d'oxyde d'azote ($NO_X$) du gaz à épurer, les valeurs situées entre 0,4 et 2,5 moles étant spécialement recommandées, celles situées entre 0,5 et 2 étant les plus avantageuses.

Le traitement du gaz avec le pyrosulfite de métal alcalin peut être opéré par voie humide ou par voie sèche. Dans le traitement par la voie humide, le gaz est lavé avec une solution aqueuse de pyrosulfite de métal alcalin. Dans le traitement par la voie sèche, qui est préféré, le pyrosulfite de métal alcalin est mis en oeuvre à l'état solide dans le gaz, en l'absence d'un liquide, en particulier d'eau. Dans le traitement par la voie sèche, diverses méthodes opératoires peuvent être utilisées. Selon une première méthode opératoire, le pyrosulfite de métal alcalin est injecté à l'état d'une poudre dans le gaz, à l'intérieur d'une chambre de réaction. Selon une seconde méthode opératoire, on fait circuler le gaz dans un lit fixe, un lit mobile ou un lit fluidisé de particules de pyrosulfite de métal alcalin. Ces méthodes opératoires sont bien connues dans la technique du génie chimique. Dans celles-ci, on a intérêt à utiliser une poudre de granulométrie régulière et la plus fine possible, de manière à accélérer la réaction du pyrosulfite de métal alcalin avec les oxydes d'azote du gaz. En règle générale, on recommande d'utiliser une poudre dont le diamètre moyen des particules est inférieur à 250 μm. La granulométrie préférée correspond à un diamètre moyen des particules n'excédant pas 200 μm, par exemple compris entre 5 et 150 μm.

Dans le procédé selon l'invention, le traitement du gaz avec le pyrosulfite de métal alcalin doit être exécuté à une température supérieure à 250 K et de préférence au moins égale à 300 K. Les températures situées entre 300 et 700 K conviennent bien. Celles comprises entre 350 et 600 K sont préférées et, parmi celles-ci, celles situées entre 450 et 550 K sont spécialement avantageuses.

Dans le procédé selon l'invention, la réaction du pyrosulfite de métal alcalin avec les oxydes d'azote du gaz libère du dioxyde de soufre qu'il peut être souhaitable d'éliminer. A cet effet, le traitement avec le pyrosulfite de métal alcalin peut être suivi d'un traitement avec de l'hydroxyde, du carbonate ou du bicarbonate de métal alcalin. On peut par exemple utiliser la procédure décrite dans la demande de brevet EP-A-0161497, qui consiste à traiter le gaz par voie sèche avec du bicarbonate de métal alcalin.

Dans le procédé selon l'invention, le pyrosulfite de métal alcalin est avantageusement du pyrosulfite de sodium.

Dans une forme d'exécution particulière du procédé selon l'invention, on met en oeuvre du pyrosulfite de métal alcalin qui est formé in-situ dans le gaz, par réaction de bicarbonate de métal alcalin avec du dioxyde de soufre présent dans le gaz selon les réactions suivantes, où M désigne un métal alcalin :

$$MHCO_3 + SO_2 \dashrightarrow MHSO_3 + CO_2$$

$$2\ MHSO_3 \dashrightarrow M_2S_2O_5 + H_2O$$

Dans cette forme d'exécution du procédé, on introduit dès lors du bicarbonate de métal alcalin dans le gaz, où il est transformé en pyrosulfite de métal alcalin selon les réactions énoncées ci-dessus.

Cette forme d'exécution de l'invention implique la présence de dioxyde de soufre dans le gaz, en une quantité suffisante pour que la quantité de pyrosulfite de métal alcalin produite soit au moins égale à la quantité stoechiométrique nécessaire pour réagir avec la totalité des oxydes d'azote du gaz. Elle présente l'avantage qu'elle ne nécessite pas l'emploi d'un gaz réactif dangereux pour éliminer, d'une part, le dioxyde de soufre et les oxydes d'azote $NO_X$ du gaz et, d'autre part, le dioxyde de soufre qui est généré par la réaction du pyrosulfite de métal alcalin avec les oxydes d'azote. Elle trouve une application avantageuse dans le traitement des fumées générées par la combustion de combustibles d'origine fossile, qui contiennent des dérivés de l'azote et des dérivés du soufre.

Le procédé selon l'invention conduit à la formation d'un résidu solide de nitrite de métal alcalin, de nitrate de métal alcalin et de sulfate de métal alcalin. Ce résidu peut être facilement éliminé en traitant le gaz dans un dispositif de dépoussiérage adéquat qui peut par exemple comprendre un filtre électrostatique. Dans le cas d'un traitement par voie sèche selon la définition qui en a été donnée plus haut, on peut utiliser un filtre à tissus filtrants (filtre à manches) dont l'efficacité est optimum.

Le procédé selon l'invention s'applique à l'épuration de tous gaz contenant des oxydes d'azote $NO_x$. Il trouve une application intéressante dans l'épuration des fumées provenant de l'incinération d'ordures ménagères ou municipales, ainsi que dans l'épuration des fumées provenant de la combustion de combustibles d'origine fossile tels que le gaz naturel, le charbon et les dérivés du pétrole. Il s'applique en particulier à l'épuration des fumées provenant des centrales thermiques de production d'électricité.

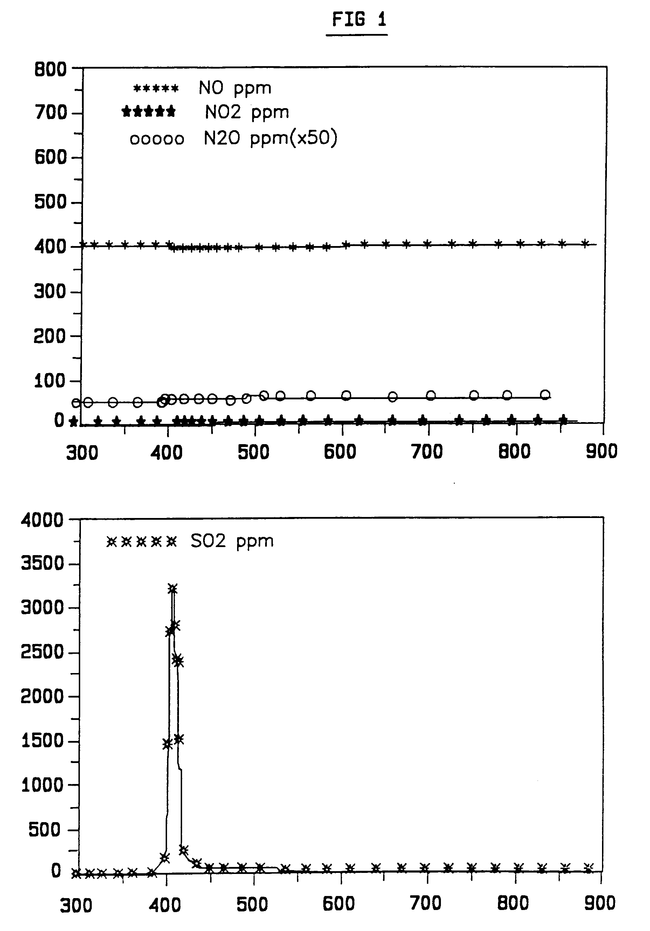

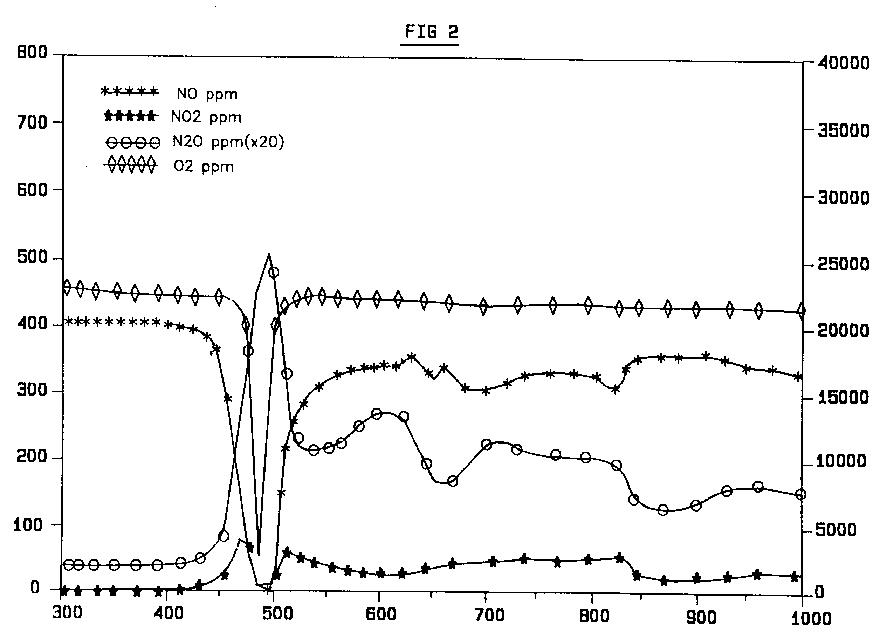

Les exemples suivants servent à illustrer l'invention. Ils sont explicités en référence aux figures 1 et 2 des dessins annexés, qui sont deux diagrammes fournissant la composition de gaz contenant des oxydes d'azote $NO_x$.

Exemple 1 (Exemple de référence).

On a préparé un gaz synthétique constitué pour l'essentiel d'argon et d'oxyde nitrique [400 µl d'oxyde nitrique (NO) par l de gaz], mais exempt d'oxygène. On a par ailleurs préparé un lit de 1 g de particules de pyrosulfite de sodium sur un lit de 5 g de silice reposant sur une grille horizontale. Dans les deux lits, on a utilisé des particules présentant un diamètre moyen de 100 µm environ. On a soumis le gaz à un déplacement ascendant uniforme à travers les lits, à une vitesse réglée pour fluidiser le lit de pyrosulfite de sodium.

Au cours de l'essai, on a fait monter la température dans le lit graduellement de 300 K à 800 K. Les résultats de l'essai sont reportés sur les deux diagrammes de la figure 1. Dans chaque diagramme de la figure 1, l'échelle des abscisses représente la température du gaz à l'entrée du lit (exprimée en degrés Kelvin). Dans le diagramme supérieur de la figure 1, l'échelle des ordonnées représente la concentration volumique de chacun des constituants NO, $NO_2$ et $N_2O$ du gaz à la sortie du lit (ces concentrations étant exprimées en ppm ou µl du constituant/l de gaz et devant être divisées par 50 dans le cas du $N_2O$). Dans le diagramme inférieur de la figure 1, l'échelle des ordonnées représente la concentration volumique de $SO_2$ dans le gaz (exprimée en µl de $SO_2$/l de gaz). On observe sur le diagramme de la figure 1 que dans chacun des essais effectué, le gaz à la sortie du lit a présenté approximativement la même composition qu'à l'entrée du lit. A la température de 425-430 K, on a relevé dans le gaz un teneur d'environ 3 ml/l de dioxyde de soufre, correspondant à la décomposition du pyrosulfite de sodium.

Exemple 2 (conforme à l'invention).

On a répété l'essai de l'exemple 1 avec un gaz synthétique constitué d'un mélange d'argon, d'oxyde nitrique (NO) et d'oxygène et un lit unique et homogène de 6 g de pyrosulfite de sodium. Le gaz mis en oeuvre à l'entrée du lit présentait la composition volumique suivante :

NO : 410 µl/l;
$O_2$ : 22587 µl/l.

On procédé code à l'exemple 1. Les résultats de l'essai sont reproduits sur le diagramme de la figure 2, dont l'échelle des abscisses représente la température du gaz à l'entrée du lit (exprimée en degrés Kelvin), l'échelle des ordonnées de gauche représente la concentration volumique de chacun des constituants NO, $NO_2$ et $N_2O$ du gaz à la sortie du lit (ces concentrations étant exprimées en ppm ou µl du constituant par l du gaz et devant être divisées par 20 dans le cas du $N_2O$) et l'échelle des ordonnées de droite représente la concentration volumique d'oxygène dans le gaz à la sortie du lit (exprimée en ppm ou µl d'oxygène par l de gaz).

On observe que le gaz a subi une épuration optimum aux températures situées entre environ 450 et 500 K. A la température d'environ 480 K, le gaz à la sortie du lit a présenté la composition suivante :

NO : 73 µl/l;
$NO_2$ : 73 µl/l;
$N_2O$ : 7 µl/l;
$O_2$ : 20.000 µl/l;

A la température d'environ 500 K, le gaz à la sortie du lit a présenté la composition suivante :

NO : 37 µl/l;
$NO_2$ : 37 µl/l;
$N_2O$ : 10 µl/l;
$O_2$ : 20.000 µl/l.

Une comparaison des résultats des exemples 1 et 2 fait immédiatement apparaître le progrès apporté dans l'épuration en oxyde nitrique, lorsque l'on combine, conformément à l'invention, l'introduction d'oxygène dans le gaz à épurer et le traitement subséquent de celui-ci avec du pyrosulfite de sodium.

**Revendications**

1. Procédé pour épurer un gaz contenant de l'oxyde nitrique, selon lequel on traite le gaz avec un composé de métal alcalin, caractérisé en ce qu'on met en oeuvre une quantité d'oxygène dans le gaz au moins égale à la quantité stoechiométrique nécessaire pour oxyder l'oxyde nitrique en peroxyde d'azote et en ce que le composé de métal alcalin est du pyrosulfite de métal alcalin que l'on met en oeuvre en une quantité suffisante pour former, par réaction avec l'oxyde nitrique et l'oxygène du gaz, du nitrite de métal alcalin, du nitrate de métal alcalin et du dioxyde de soufre.

**2.** Procédé selon la revendication 1, caractérisé en ce que, dans le cas où le gaz contient du peroxyde d'azote, on met en oeuvre une quantité suffisante de pyrosulfite de métal alcalin pour convertir l'oxyde nitrique et le peroxyde d'azote en nitrite et en nitrate de métal alcalin.

**3.** Procédé selon la revendication 1 ou 2, caractérisé en ce qu'on met en oeuvre plus de 0,25 mole de pyrosulfite de métal alcalin par mole d'oxyde nitrique et de peroxyde d'azote du gaz.

**4.** Procédé selon la revendication 3, caractérisé en ce qu'on met en oeuvre de 0,4 à 2,5 mole de pyrosulfite de métal alcalin par mole d'oxyde d'azote du gaz.

**5.** Procédé selon l'une quelconque des revendications 1 à 4, caractérisé en ce que le traitement du gaz avec le pyrosulfite de métal alcalin est opéré par voie sèche.

**6.** Procédé selon l'une quelconque des revendications 1 à 5, caractérisé en ce qu'on met en oeuvre un rapport molaire $O_2$/NO supérieur à 1.

**7.** Procédé selon la revendication 6, caractérisé en ce qu'on met en oeuvre un rapport molaire $O_2$/NO au moins égal à 8.

**8.** Procédé selon la revendication 7, caractérisé en ce qu'on met en oeuvre un rapport molaire $O_2$/NO supérieur à 25.

**9.** Procédé selon l'une quelconque des revendications 1 à 8, caractérisé en ce qu'on met en oeuvre un gaz dont la température est supérieure à 250 K.

**10.** Procédé selon la revendication 8, caractérisé en ce qu'on met en oeuvre un gaz dont la température est comprise entre 450 et 550 K.

**11.** Procédé selon l'une quelconque des revendications 1 à 10, caractérisé en ce que le gaz est une fumée générée par l'incinération d'ordures ménagères ou municipales.

**12.** Procédé selon l'une quelconque des revendications 1 à 11, caractérisé en ce qu'on met en oeuvre du pyrosulfite de métal alcalin formé in situ dans le gaz, par réaction de bicarbonate de métal alcalin avec du dioxyde de soufre présent dans le gaz.

**13.** Procédé selon la revendication 12, caractérisé en ce que le gaz est une fumée générée par la combustion d'un combustible soufré d'origine fossile.

**14.** Procédé selon l'une quelconque des revendications 1 à 13, caractérisé en ce que le métal alcalin est le sodium.

**Claims**

**1.** Process for cleaning a gas containing nitrogen monoxide, according to which the gas is treated with an alkali metal compound, characterized in that a quantity of oxygen is employed in the gas which is at least equal to the stoichiometric quantity which is necessary in order to oxidize the nitrogen monoxide to nitrogen dioxide, and in that the alkali metal compound is an alkali metal pyrosulphite which is employed in a quantity which is sufficient to form, by reaction with nitrogen monoxide and the oxygen in the gas, alkali metal nitrite, alkali metal nitrate and sulphur dioxide.

**2.** Process according to Claim 1, characterized in that, in the case where the gas contains nitrogen dioxide, a quantity of alkali metal pyrosulphite is employed which is sufficient to convert the nitrogen monoxide and the nitrogen dioxide to alkali metal nitrite and nitrate.

**3.** Process according to Claim 1 or 2, characterized in that more than 0.25 mol of alkali metal pyrosulphite is employed per mole of nitrogen monoxide and nitrogen dioxide in the gas.

**4.** Process according to Claim 3, characterized in that from 0.4 to 2.5 mol of alkali metal pyrosulphite is employed per mole of oxide of nitrogen in the gas.

**5.** Process according to any one of Claims 1 to 4, characterized in that the gas is treated with the alkali metal pyrosulphite by a dry route.

**6.** Process according to any one of Claims 1 to 5, characterized in that a molar ratio of $O_2$:NO of greater than 1 is employed.

**7.** Process according to Claim 6, characterized in that a molar ratio of $O_2$:NO of at least 8 is employed.

**8.** Process according to Claim 7, characterized in that a molar ratio of $O_2$:NO of greater than 25 is employed.

**9.** Process according to any one of Claims 1 to 8, characterized in that a gas is employed with a temperature of greater than 250 K.

**10.** Process according to Claim 8, characterized in that a gas is employed with a temperature of between 450 and 550 K.

**11.** Process according to any one of Claims 1 to 10, characterized in that the gas is fumes generated by the incineration of household or municipal refuse.

12. Process according to any one of Claims 1 to 11, characterized in that the alkali metal pyrosulphite employed is formed in situ within the gas, by reacting alkali metal bicarbonate with the sulphur dioxide present in the gas.

13. Process according to Claim 12, characterized in that the gas is fumes generated by the combustion of a sulphur-containing fossil fuel.

14. Process according to any one of Claims 1 to 13, characterized in that the alkali metal is sodium.

**Patentansprüche**

1. Verfahren zum Reinigen eines Stickstoffoxid enthaltenden Gases, gemäß dem man das Gas mit einer Alkalimetallverbindung behandelt, dadurch gekennzeichnet, daß man in dem Gas eine Sauerstoffmenge einsetzt, die mindestens gleich der stöchiometrischen Menge ist, die zur Oxidation des Stickstoffoxids in Stickstoffdioxid notwendig ist, und dadurch, daß die Alkalimetallverbindung Alkalimetallpyrosulfit ist, das man in einer Menge einsetzt, die ausreicht, um durch Reaktion mit dem Stickstoffoxid und dem Sauerstoff des Gases Alkalimetallnitrit, Alkalimetallnitrat und Schwefeldioxid zu bilden.

2. Verfahren gemäß Anspruch 1, dadurch gekennzeichnet, daß man, falls das Gas Stickstoffdioxid enthält, eine Menge an Alkalimetallpyrosulfit einsetzt, die ausreicht, um das Stickstoffoxid und das Stickstoffdioxid in Alkalimetallnitrit und -nitrat umzuwandeln.

3. Verfahren gemäß Anspruch 1 oder 2, dadurch gekennzeichnet, daß man mehr als 0,25 Mol Alkalimetallpyrosulfit pro Mol Stickstoffoxid und Stickstoffdioxid des Gases einsetzt.

4. Verfahren gemäß Anspruch 3, dadurch gekennzeichnet, daß man 0,4 bis 2,5 Mol Alkalimetallpyrosulfit pro Mol Stickstoffoxid des Gases einsetzt.

5. Verfahren gemäß einem der Ansprüche 1 bis 4, dadurch gekennzeichnet, daß die Behandlung des Gases mit dem Alkalimetallpyrosulfit trocken ausgeführt wird.

6. Verfahren gemäß einem der Ansprüche 1 bis 5, dadurch gekennzeichnet daß man ein Molverhältnis $O_2/NO$ größer als 1 einsetzt.

7. Verfahren gemäß Anspruch 6, dadurch gekennzeichnet, daß man ein Molverhältnis $O_2/NO$ von wenigstens gleich 8 einsetzt.

8. Verfahren gemäß Anspruch 7, dadurch gekennzeichnet, daß man ein Molverhältnis $O_2/NO$ größer als 25 einsetzt.

9. Verfahren gemäß einem der Ansprüche 1 bis 8, dadurch gekennzeichnet, daß man ein Gas einsetzt, dessen Temperatur höher als 250 K ist.

10. Verfahren gemäß Anspruch 8, dadurch gekennzeichnet, daß man ein Gas einsetzt, dessen Temperatur zwischen 450 und 550 K liegt.

11. Verfahren gemäß einem der Ansprüche 1 bis 10, dadurch gekennzeichnet, daß das Gas ein durch Verbrennung von Haus- oder Kommunalmüll erzeugtes Rauchgas ist.

12. Verfahren gemäß einem der Ansprüche 1 bis 11, dadurch gekennzeichnet, daß man Alkalimetallpyrosulfit einsetzt, das durch Reaktion von Alkalimetallbicarbonat mit in dem Gas vorhandenem Schwefeldioxid in situ in dem Gas gebildet wird.

13. Verfahren gemäß Anspruch 12, dadurch gekennzeichnet, daß das Gas ein durch Verbrennung eines schwefelhaltigen Brennstoffs fossilen Ursprungs erzeugtes Rauchgas ist.

14. Verfahren gemäß einem der Ansprüche 1 bis 13, dadurch gekennzeichnet, daß das Alkalimetall Natrium ist.

## FIG 1

FIG 2